# EUROPÄISCHE PATENTSCHRIFT

(11) **EP 1 010 232 B1**
(45) Veröffentlichungstag und Bekanntmachung des Hinweises auf die Patenterteilung: **02.10.2002**
(21) Anmeldenummer: 98936222.3
(22) Anmeldetag: 18.06.1998
(51) Int. Cl.: H02J 7/10, H02J 7/00

(54) **VERFAHREN ZUM LADEN VON AKKUMULATOREN, INSBESONDERE IN SCHNURLOSEN KOMMUNIKATIONSEINRICHTUNGEN**
METHOD FOR CHARGING BATTERIES, ESPECIALLY IN WIRELESS COMMUNICATION DEVICES
PROCEDE POUR CHARGER DES ACCUMULATEURS, NOTAMMENT DANS DES UNITES DE COMMUNICATION SANS FIL

(30) Priorität: 26.08.1997 DE 19737146
(43) Veröffentlichungstag der Anmeldung: 21.06.2000
(73) Patentinhaber: SIEMENS AKTIENGESELLSCHAFT, 80333 München (DE)
(72) Erfinder: FISCHEDICK, Thomas, D-46348 Raesfeld (DE)
(86) Internationale Anmeldenummer: DE9801679
(87) Internationale Veröffentlichungsnummer: WO99010961

(56) Entgegenhaltungen:
- EP-A- 0 616 281
- DE-A- 3 924 499
- DE-A- 4 316 471
- DE-C- 4 236 811

## Beschreibung

Die Erfindung betrifft ein Verfahren zum Laden von Akkumulatoren, insbesondere in schnurlosen Kommunikationseinrichtungen gemäß dem Oberbegriff des Patentanspruches 1.

Für viele Arten von elektrischen und elektronischen Geräten, die zumindest auch zeitweise ohne direkte Verbindung mit dem Stromnetz betrieben werden sollen, insbesondere in Mobiloder Schnurlostelefonen, sind überwiegend wiederaufladbare Akkumulatoren vorgesehen. Diese Akkumulatoren werden entweder im Festteil des jeweiligen Gerätes oder in eigenen Ladestationen zum neuen Gebrauch im Mobilbetrieb aufgeladen. Dabei wird über eine Ladeenergiequelle, üblicherweise durch eine an das Stromnetz angeschlossene Ladeeinrichtung gegeben, ein auf den eingesetzten Akkumulator abgestimmter Ladestrom erzeugt und an diesen weitergeleitet. Dabei ist aber besonderes Augenmerk darauf zu legen, daß es nicht zur Überladung der Akkumulatoren kommt, was insbesondere bei öfterem Auftreten zu Leistungseinbußen und schlimmstenfalls zur Zerstörung führen kann.

Um die Überladung der Akkumulatoren durch die Ladeeinrichtung einer schnurlosen Kommunikationseinrichtung zu vermeiden, wurde in der DE-PS 42 36 811 vorgeschlagen, die Ladespannung in gewissen Zeitabständen zu messen und in Abhängigkeit vom Verlauf der Ladespannungskurve, welche bei Ansteigen den Ladezustand, bei Gleichbleiben den geladenen Zustand und bei nachfolgendem Abfallen den Überladungszustand anzeigt, die Akkumulatoren weiter zu laden bzw. das Laden zu beenden. So sind insbesondere die NiMH-Akkumulatoren mit wesentlich höherer Kapazität als NiCd-Akkumulatoren überaus empfindlich gegenüber ständiger Überladung.

Nun ist jedoch die genaue Messung der Ladespannungskurve in der erforderlichen Genauigkeit und unter wechselnden Betriebsbedingungen oftmals schwierig zu ermitteln. Andererseits ist bei anderen Verfahren zur Aufladung der Akkumulatoren die Kenntnis der Kapazität der Akkumulatoren und deren Technologie Voraussetzung für den störungsfreien und langlebigen Betrieb, so daß ein Umsteigen auf Akkumulatoren anderer als der ursprünglichen Kapazität und Technologie nicht möglich ist. Auch die richtige Anzeige über den Ladezustand bzw. die Kapazität der neuen Akkumulatoren ist mit den bisherigen Verfahren nicht möglich.

Aus der DE 43 16 471 A1 ist ein Verfahren zur Bestimmung des Ladezustands einer wiederaufladbaren Batterie bekannt, bei dem in einem Meßbetrieb der Zählerstand einer elektronischen Zählvorrichtung entsprechend dem Lade- und Entladestrom veränderbar ist und zusätzlich in Abhängigkeit von der tatsächlich vorhandenen Restkapazität der Batterie verändert wird, wobei der Zählvorrichtung einerseits Signale entsprechend der mit der Alterung abnehmenden Kapazität der Batterie und andererseits Signale entsprechend dem Ladezustand der Batterie zugeführt werden. Der Meßbetrieb weist ein oder mehrere Justierzyklen sowie ein oder mehrere Arbeitszyklen auf, wobei der Justierzyklus einer Entladung der wiederaufladbaren Batterie bis zur Entladeschlußspannung, einer Aufladung bis zur Volladung und anschließend zur Bestimmung der Restkapazität wiederum eine Entladung bis zur Entladeschlußspannung der Batterie beinhaltet und wobei nach einem abgeschlossenen Justierzyklus mindestens ein Arbeitszyklus folgt, der mit einer Volladung der Batterie beginnt und dem unter Ermittlung des jeweiligen Ladezustands eine Entladung bis zur Entladeschlußspannung folgt. Die Justier- und Arbeitszyklen werden durch Verwaltung von qualitativen und quantitativen Meß- und Regeldaten mit der Zählvorrichtung überwacht. In einem bevorzugten Ausführungsbeispiel des Verfahrens umfaßt der Meßbetrieb einen Justierzyklus und viele Arbeitszyklen mit einer Folge von Kapazitäten, wobei jede Kapazität des momentanen Arbeitszyklus mit der des vorhergehenden Arbeitszyklus verglichen und das Vergleichsergebnis gespeichert wird und wobei die Aufladung der wiederaufladbaren Batterie im folgenden Arbeitszyklus durch das Vergleichsergebnis aus dem vorangegangenen Arbeitszyklus festgelegt wird.

Das Ziel der vorliegenden Erfindung ist daher ein Verfahren, durch welches unabhängig von der Technologie der eingesetzten Akkumulatoren ein ständiges Überladen der Akkumulatoren auch bei unterschiedlicher Kapazität, insbesondere bei von-der ursprünglichen Kapazität abweichendem Wert, sicher vermieden werden und somit eine lange Lebensdauer der Akkumulatoren garantiert werden kann. Weiters soll zusätzlich im betriebenen Gerät automatisch eine richtige Kapazitätsanzeige realisiert werden können.

Dieses Ziel wird ausgehend von dem im Oberbegriff des Patentanspruches 1 definierten Verfahren durch die im Kennzeichen des Patentanspruches 1 angegebenen Merkmale gelöst.

Durch dieses Verfahren können die Ladephasen im Anschluß an die Erstladephase genau auf die Technologie und Kapazität der eingesetzten Akkumulatoren automatisch abgestimmt werden, ohne daß der Benutzer irgendwelche Daten der Akkumulatoren eingeben oder Abstimmungen selbst durchführen muß und ohne daß es im täglichen Betrieb des Gerätes, beispielsweise eines Mobiltelefons oder einer ähnlichen Kommunikationseinrichtung, zur Überladung der Akkumulatoren kommt. Somit ist ein langer und störungsfreier Betrieb gewährleistet, ohne daß der Benutzer selbst die Aufladung überwachen muß. Die Ladung der Akkumulatoren kann dann immer rasch mit maximalem Strom erfolgen, ohne daß eine Überladung befürchtet werden muß. Das zumindest teilweise Entladen der Akkumulatoren nach der Erstladephase kann vorteilhafterweise bereits durch den bestimmungsgemäßen Gebrauch des Gerätes geschehen.

Gemäß einer vorteilhaften Alternative des erfindungsgemäßen Verfahrens ist vorgesehen, daß die Akkumulatoren nach der Erstladephase vollständig entladen werden und dabei ein die entnommene Kapazität repräsentierender Wert generiert wird und daß daran anschließende Ladephasen folgen, bei denen die Akkumulatoren in Abhängigkeit vom generierten Wert zumindest teilweise geladen werden, welcher auch als neuer Basiswert abgespeichert wird, wenn der generierte Wert vom Basiswert abweicht und bei Beginn der zu dem generierten Wert führenden Entladungsphase die Akkumulatoren einen vollen Ladezustand haben.

Damit kann die genaue Kapazität der eingesetzten Akkumulatoren beliebiger Technologie und vorerst unbekannter Kapazität noch genauer automatisch vom Gerät selbst erkannt werden, ohne daß der Benutzer diese Daten eingeben muß, wodurch eine genaue Abstimmung der Ladezyklen auf die eingesetzten Akkumulatoren zur Vermeidung von Überladung gestattet ist.

Zur Vereinfachung des Betriebes des Gerätes ist eine vorteilhafte Variante des Verfahrens dadurch gekennzeichnet, daß die Dauer der Erstladephase und damit der Basiswert in Abhängigkeit von der maximalen Kapazität der erstmalig verwendeten Akkumulatoren anfangs vorgegeben ist. Damit sind die wesentlichen Daten für die Standardausrüstung vorgegeben und das Gerät kann von Beginn an die optimale Aufladung der Akkumulatoren automatisch steuern.

In vorteilhafter Weise und schaltungstechnisch einfach zu realisieren ist es, wenn der Basiswert bzw. der aufgrund der entnommenen Kapazität generierte Wert als der Wert eines Nachladezählers gegeben ist, wobei dessen Verkleinerung proportional dem Produkt aus während der Ladephasen gemessenem Ladestrom und Zeit erfolgt. Diese Einbeziehung des Ladestromes in die Parameter, die bei der Ladung der Akkumulatoren überwacht werden, ist deshalb notwendig, da unter unterschiedlichen Speisebedingungen unterschiedliche Ladeströme vorliegen und dies zu einer Verschlechterung der Bilanzierung und damit auch des Ladeverfahrens führen würde.

Unter Verwendung bewährter Bauteile und zur einfachen und schnellen Anpassung der benötigten Werte ist gemäß einem weiteren Erfindungsmerkmal vorgesehen, daß der erste, vorgegebene Basiswert und jeder abzuspeichernde generierte Wert des Nachladezählers in einem EEPROM abgelegt wird.

Vorteilhafterweise ist weiters vorgesehen, daß in einem ersten Teil der Erstladephase, vorzugsweise 5,5 Stunden, mit maximalem Strom geladen wird, und daß im verbleibenden Teil der Erstladephase mit einem geringeren Strom, vorzugsweise der Hälfte des maximalen Stroms, geladen wird. Mit dieser Staffelung kann selbst bei der Erstladephase, bei der Kapazität der eingesetzten Akkumulatoren noch nicht bekannt ist, eine schädigende Überladung weitestgehend verhindert werden.

Um die Möglichkeit zur automatischen Erkennung der Technologie und der Kapazität vorerst unbekannter Akkumulatoren erst unter Bedingungen freizugeben, unter welchen diese Daten erfaßbar sind, ist gemäß einer vorteilhaften Verfahrensvariante vorgesehen, daß ein das Überschreiben des Basiswertes gestattender Zustand im Gerät eingestellt wird, erst wenn eine komplette Erstladephase durchlaufen ist, der aufgrund der zumindest teilweisen Entladung der Akkumulatoren generierte Wert größer als der Basiswert ist oder der aufgrund der vollständigen Entladung der Akkumulatoren generierte Wert vom Basiswert abweicht und der generierte Wert innerhalb vorgegebener Grenzen liegt.

Vorzugsweise ist unter Einsatz bewährter Technologien und Bauteile dazu vorgesehen, daß der das Überschreiben des Basiswerts gestattende Zustand durch ein im EEPROM zurückgesetztes Erstladeflag gegeben ist.

Um zusätzlich zur sicheren und automatischen Erkennung der Kapazität der eingesetzten Akkumulatoren ohne Zutun des Benutzers eine verläßliche und genaue Anzeige der Kapazität und des Ladezustandes beliebiger eingesetzter Akkumulatoren ebenfalls ohne notwendiges Eingreifen des Benutzers realisieren zu können, ist erfindungsgemäß vorgesehen, daß zusätzlich zu den oben genannten Merkmalen vor der Erstladephase und nach dem ersten Einsetzen der Akkumulatoren in das Gerät die Akkumulatorspannung ermittelt wird, daß diese ermittelte Spannung mit einer unteren Spannungsschwelle und einem zweiten, vorgegebenen Spannungswert verglichen wird, und daß ein erster Anzeigezustand generiert wird, wenn die ermittelte Spannung kleiner als die untere Spannungsschwelle ist, daß ein zweiter Anzeigezustand generiert wird, wenn die ermittelte Spannung kleiner oder gleich dem zweiten, vorgegebenen Spannungswert ist, und daß ein dritter Anzeigezustand generiert wird, wenn die ermittelte Spannung größer dem zweiten, vorgegebenen Spannungswert ist. Damit kann eine erste, schon relativ genaue Anzeige des Ladezustandes beliebiger eingesetzter Akkumulatoren automatisch erhalten werden, ohne daß der Benutzer des Gerätes irgendwelche Daten der Akkumulatoren selbst kennen und eingeben muß.

Vorteilhafterweise ist dabei vorgesehen, daß der zweite Spannungswert aus einem vorgegebenen Spannungswert, der den Entladezustand der Akkumulatoren repräsentiert, und einem im EEPROM abgespeicherten Spannungswert, der die Maximalladespannung der bislang verwendeten Akkumulatoren repräsentiert, gemittelt wird. Dadurch ist bei der Standardausrüstung des Gerätes von Beginn an schon eine sehr genaue Anzeige des Ladezustandes gewährleistet.

Eine ganz genaue Anzeige des Ladezustandes und allenfalls der Kapazität beliebiger eingesetzter Akkumulatoren kann ganz ohne jegliche Notwendigkeit der Eingabe von Daten durch den Benutzer erzielt werden, wenn gemäß einem weiteren Merkmal der Erfindung vorgesehen ist, daß nach der Erstladephase der die bislang entnommene Kapazität repräsentierende, aktuelle generierte Wert mit dem Basiswert für die maximal zu entnehmende Kapazität verglichen wird, und daß ein vierter Anzeigezustand generiert wird, wenn die ermittelte Spannung kleiner als die untere Spannungsschwelle ist, und daß abhängig vom Verhältnis des aktuellen generierten Wertes zum Basiswert weitere den Ladezustand der Akkumulatoren repräsentierende Anzeigezustände generiert werden. Damit ist nach erstmaligem automatischen Erkennen der Kapazität der eingesetzten Akkumulatoren automatisch für eine sehr genaue Ladezustandsanzeige gesorgt.

Eine bei vielerlei Geräten übliche Unterteilung der Ladezustandsanzeige kann mit überaus hoher Genauigkeit realisiert werden, wenn erfindungsgemäß während jeder sich an die Erstladephase anschließenden Ladephase der erste Anzeigezustand generiert wird, wenn der aktuelle generierte Wert zwischen 0% und 33% des Basiswertes ist, daß der zweite Anzeigezustand generiert wird, wenn der aktuelle generierte Wert zwischen 34% und 66% des Basiswertes ist, daß der dritte Anzeigezustand generiert wird, wenn der aktuelle generierte Wert zwischen 67% und 99% des Basiswertes ist, und daß ein fünfter Anzeigezustand generiert wird, wenn der aktuelle generierte Wert gleich dem Basiswert ist. Die Grundlage ist dabei wieder der Wert des Nachladezählers im Verhältnis zur maximalen Kapazität der Akkumulatoren.

Um schon bei der Erstladephase vorteilhafterweise die Verhinderung schädigender Überladung der Akkumulatoren vorzusehen, wird während jeder mit maximalem Strom durchgeführten Ladephase die Ladespannungskurve überwacht und das Laden beendet, wenn die Ladespannung über eine bestimmte Zeitspanne kontinuierlich von einem davor erreichten Wert abgesunken ist.

Um die Abschaltung der Ladung in Betriebszuständen zu vermeiden, in welchen Schwankungen der Ladespannungskurve auftreten können, jedoch noch keine Überladungsgefahr besteht, ist vorteilhafterweise vorgesehen, daß die Überwachung der Ladespannungskurve zu Beginn des Ladens während einer vorbestimmten Zeitspanne, bei allfälligem Umschalten des Ladestroms und während der auf die Erstladephase folgenden Ladephasen ausgesetzt wird.

Zusätzlich kann zur Erzielung erhöhter Sicherheit vor Beschädigungen der Akkumulatoren vorgesehen sein, daß die Temperatur der Akkumulatoren während des Ladens überwacht wird, und daß zumindest zwei Temperaturschwellen vorgegeben sind, wobei unterhalb der niedrigeren Temperaturschwelle mit vollem Ladestrom geladen wird, zwischen der niedrigeren und der höheren Temperaturschwelle mit halbem Ladestrom geladen wird, und oberhalb der höheren Temperaturschwelle das Erhaltungsladen, vorzugsweise mit einem Sechstel des vollen Ladestromes, durchgeführt wird.

Um diese Verfahrensvariante noch effektiver zu gestalten, kann jede Temperaturschwelle nochmals in zwei Teilschwellen aufgeteilt sein, wobei im Falle ansteigender Temperatur der Akkumulatoren bei der höheren Teilschwelle der jeweiligen Temperaturschwelle und im Falle abfallender Temperatur bei der niedrigeren Teilschwelle der jeweiligen Temperaturschwelle die Stromstärke des Ladestroms umgeschaltet wird.

Um eine genaue Anzeige des Entladezustandes beliebiger eingesetzter Akkumulatoren realisieren zu können, ist gemäß einer weiteren vorteilhaften Variante der Erfindung vorgesehen, daß die Entladekurve der Spannung überwacht wird und der erste Anzeigezustand generiert wird, wenn die Spannung in einem Bereich um den den Entladezustand der Akkumulatoren repräsentierenden Wert liegt, der Gradient der Entladekurve einen vorgegebenen negativen Wert überschreitet und eine vorgegebene Anzahl von Malen hintereinander stärker negativ wurde, oder wenn das untere Ende des Bereiches um den den Entladezustand repräsentierenden Wert erreicht wurde.

In der nachfolgenden Beschreibung soll unter Bezugnahme auf die beigefügten Zeichnungen ein bevorzugtes Ausführungsbeispiel des erfindungsgemäßen Verfahrens näher erläutert werden.

Dabei zeigt die
Fig. 1 ein Diagramm zur Erläuterung des Ablaufes einer Erstladephase,
Fig. 2 ist ein Diagramm, das die Kapazitätserkennung erläutert, wenn die Akkumulatoren bis zum Entladezustand entladen worden sind,
Fig. 3 zeigt ein Diagramm, das die Kapazitätserkennung erläutert, wenn das Gerät vor vollständiger Entladung der Akkumulatoren aber mit größerer Kapazitätsentnahme als der bisherigen Maximalkapazität ausgeschaltet wurde,
Fig. 4 ist ein Diagramm zur Erläuterung der Kapazitätserkennung, wenn die Akkumulatoren des Gerätes vor vollständiger Entladung wieder aufgeladen werden,
Fig. 5a zeigt ein Diagramm zur Erläuterung der Temperaturüberwachung des Ladevorganges für steigende Temperatur der Akkumulatoren und
Fig. 5b zeigt ein Diagramm entsprechend Fig. 5a, jedoch für fallende Temperatur.

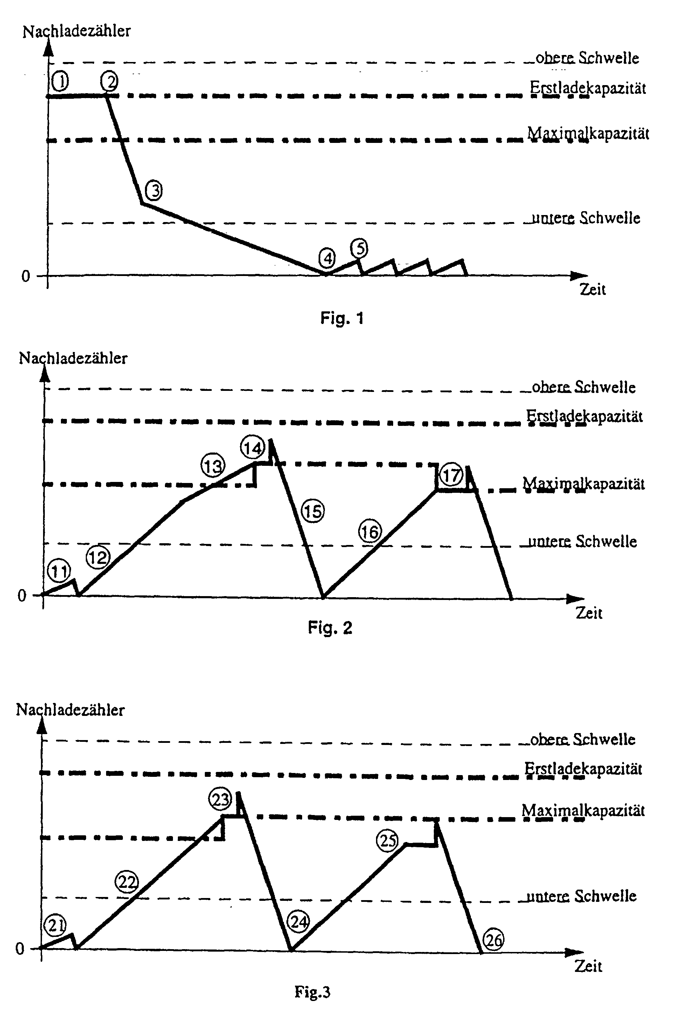

In Fig. 1 ist dargestellt, wie etwa für eine Standardausrüstung eines mit Akkumulatoren betriebenen Gerätes eine Erstladephase ausgelegt sein kann. Dabei wird anfänglich mit der Standardkapazität der vorgesehenen Akkumulatoren ausgegangen, beispielsweise von einer heute üblichen Kapazität von 1200 mAh einer NiMH-Zelle, und dafür die Dauer der Erstladephase berechnet. Als die Dauer der Erstladephase repräsentierender Wert wird ein Nachladezähler auf einen der Berechnung der Erstladephase entsprechenden Wert gesetzt und vorzugsweise in einem EEPROM im Gerät eingespeichert. Der Wert des Nachladezählers wird so bestimmt, daß die Akkumulatoren in jedem Fall einmal voll aufgeladen werden. Diesem Zustand entspricht der Abschnitt 1 der ausgezogenen Linie in Fig. 1, die den Wert des Nachladezählers darstellt und die vorerst auf dem strichpunktiert dargestellten Niveau der Erstladekapazität ist. Die sinnvollen Begrenzungen für die Maximalkapazität sind durch strichlierte Linien symbolisiert.

Bei 2 beginnt die Erstladephase der Akkumulatoren. Zur Verhinderung schädigender Überladung wird die Erstladung gestaffelt. So wird eine erste Zeitspanne, im gegenständlichen Beispiel etwa 5,5 Stunden, mit dem maximalen Strom geladen, wobei auch der Nachladezähler rasch vermindert wird, wie durch den Abschnitt 2 - 3 der Linie im Diagramm angezeigt ist, und die restliche Ladezeit, die sich aus der maximalen Kapazität und einem Ladefaktor ergibt, mit der Hälfte des maximalen Ladestroms, welchem Zustand der Abschnitt 3 - 4 in Fig. 1 entspricht. Letzterer Zustand kann etwa in einfacher Weise dadurch realisiert sein, daß eine bestimmte, kurze Zeitspanne mit maximalem Strom geladen wird, beispielsweise 5 Minuten, und eine gleich lange Zeitspanne dann mit dem Laden ausgesetzt wird.

Die Verminderung des Nachladezählers während der Ladephasen erfolgt proportional dem Produkt aus Ladestrom und Zeit. Daher ist es auch von Wichtigkeit für die richtige Bilanzierrung, daß der an den Akkumulatorenklemmen fließende Ladestrom überwacht und gemessen wird. So können unterschiedliche Speisebedingungen, etwa bei Betrieb des Gerätes in verschiedenen Ländern mit unterschiedlichen Stromversorgungsbedingungen, zu unterschiedlichen Ladeströmen führen. Ohne Ladestrommessung würde sich bei einem Wechsel der Ladestromstärke die Bilanzierung des erfindungsgemäßen Verfahrens verschlechtern, bei Messung des Ladestroms kann dessen jeweilige aktuelle Größe für die Verkleinerung des Nachladezählers herangezogen werden.

Der Wert des Ladestromes wird erstmalig durch arithmetische Mittelwertbildung ermittelt, im weiteren Verlauf vorzugsweise nur mehr durch gleitende Mittelwertbildung erhalten, wobei jeder neue Wert mit einem geringen Anteil, vorzugsweise mit 1/128-tel, gewichtet wird, so daß eventuelle "Ausreißer", beispielsweise aufgrund von Lastschwankungen, das Gesamtergebnis nicht verfälschen.

Sollte das Gerät bzw. der Akkumulator nicht sofort oder nicht während der gesamten Zeit mit der die Aufladung der Akkumulatoren bewirkenden Ladeeinrichtung verbunden sein, wird über eine entsprechende Zählerschaltung der Nachladezähler entsprechend dem Stromverbrauch erhöht. In jedem Fall wird aber nach der vorbestimmten Zeitspanne der Erstladephase, hier also den 5,5 Stunden, von maximalem auf halben Ladestrom umgeschaltet.

Bei 4 ist schließlich der volle Ladezustand der Akkumulatoren erreicht, was vorzugsweise über ein -dU-Kriterium erkannt werden kann, welches später näher erläutert wird. Am Ende der Erstladephase wird eine Erstladeflag im EEPROM zurückgesetzt und derart in einen Betriebszustand umgeschaltet, in welchem eine automatische Kapazitätserkennung neu eingesetzter Akkumulatoren unterschiedlicher Technologie und Kapazität ermöglicht ist. Wenn dem Akkumulator laut Strombilanzierung mehr als ein bestimmter geringer Anteil seiner Maximalkapazität, beispielsweise mehr als 2% dieser Maximalkapazität, entzogen wurde, wird, bei 5 in Fig. 1, ein Erhaltungsstrom eingeschaltet, der vorzugsweise etwa ein Sechstel der maximalen Stromstärke aufweist.

Beim Einlegen von neuen Akkumulatoren in das Gerät kann vorteilhafterweise auch gleich eine erste Anzeige des Ladezustandes und/oder der Kapazität der Akkumulatoren realisiert werden, welche auf der gemessenen Akkumulatorenspannung beruht. Dazu wird zum einen die für die Akkumulatoren ermittelte Entladespannung, beispielsweise 2,28 V, und zum anderen eine im EEPROM abgelegte Spannung verwendet, welche im wesentlichen einem vollen Ladezustand der Akkumulatoren entspricht. Nach erstmalig, d. h. nach dem Reset, vorzugsweise arithmetischer Mittelung wird dieser Mittelwert mit dem gemessenen Spannungswert der Akkumulatoren verglichen und hieraus eine erste Anzeige realisiert. Jeder weitere Wert der Akkumulatorenspannung wird vorzugsweise wieder durch die bereits weiter oben erläuterte gleitende Mittelwertbildung erhalten.

Wenn dabei die Akkumulatorspannung kleiner als die Entladespannung ist, wird über herkömmliche Anzeigetreiberkreise und beispielsweise unter Verwendung für die entsprechenden Geräte üblichen Symbole eine Anzeige realisiert, die dem Benutzer den Entladezustand der Akkumulatoren signalisiert. Sollte die Akkumulatorenspannung gleich oder geringer sein als der obige Mittelwert, dann wird eine Anzeige zur Signalisierung eines Ladezustandes von maximal einem Drittel der Maximalkapazität realisiert und wenn die Akkumulatorenspannung größer als der besagte Mittelwert ist, wird eine Kapazitätsanzeige von maximal zwei Drittel der Maximalkapazität erzeugt. Somit ist der Benutzer immer im sicheren Bereich, kann nicht von einer Entladung der Akkumulatoren überrascht werden, sondern wird zu Beginn eher zu früh zum Nachladen aufgefordert. Da die Akkumulatorenspannung aber kein absolutes Kriterium für den Ladezustand eines Akkumulators darstellt, wird die Dauer der Erstladung nur im letzten Zustand auf einen geringeren Wert als Volladung reduziert, beispielsweise auf 60%, um eine Schädigung durch Überladen zu verhindern.

Wenn nun das Gerät mit unterschiedlichen Akkumulatortypen, etwa NiCd-Technologie bzw. NiMH-Technologie mit auch unterschiedlichen Kapazitäten, etwa 700 mAh bzw. 1200 mAh, betrieben werden soll, die neu eingesetzten Akkumulatoren vom Benutzer nicht parametrisiert werden sollen und trotzdem eine genaue Abstimmung der Ladedauer und eine genaue Anzeige der Kapazität und/oder des Ladezustandes realisiert werden soll, ist eine automatischen Erkennung durch das Gerät notwendig. Vorerst kann bei Einsatz neuer Akkumulatoren bzw. Aus- und Einschalten nur über die nur im EEPROM abgespeicherten Werte eine Ladedauerbestimmung bzw. Ladezustandsanzeige erfolgen.

Wenn allerdings folgende Kriterien erfüllt sind, kann automatisch vom Gerät ein Kapazitäts- bzw. Anzeigenabgleich durchgeführt werden:

Vor dem Gebrauch des Gerätes müssen die Akkumulatoren einen vollen Ladezustand besessen haben bzw. muß der volle Ladezustand angezeigt worden sein; es muß ein längerer Gebrauch des Gerätes mit Entladung der Akkumulatoren unter Bilanzierung der Verbrauchsströme stattgefunden haben, welcher bis zur selbständigen Abschaltung ging bzw. bis zur Anzeige des Entladezustandes der Akkumulatoren, wonach das Gerät mit der Ladeeinrichtung verbunden wurde; alternativ dazu kann auch eine neue Kapazität erlernt werden, wenn der Wert des Nachladezählers bei Verbindung des Gerätes mit der Ladeeinrichtung bzw. Abschaltung größer ist als der die vorherige maximale Kapazität repräsentierende Wert des Nachladezählers. Schließlich soll die neue Kapazität in einem sinnvollen Bereich, herkömmlicherweise mit einer unteren Grenze von 300 mAh und einer oberen Grenze von 2000 mAh, liegen.

Zur Erzielung einer genaueren Anzeige als Benutzerinformation sollen zusätzlich noch eine die vollständige Entladung symbolisierende vierte Anzeige, etwa ein blinkendes Symbol für leere Akkumulatoren, und eine fünfte Anzeige für den vollen Ladezustand der Akkumulatoren realisiert sein, was ebenfalls auf Grundlage des Wertes des Nachladezählers im Verhältnis zur maximalen Kapazität erfolgt.

In Fig. 2 ist ein Diagramm gezeigt, welches die Erkennung einer von der ursprünglich vorgegebenen Kapazität abweichenden neuen Kapazität für den Fall erläutert, daß die Akkumulatoren durch längeren Gebrauch des Gerätes den Entladezustand erreichen, erläutert. Ausgangspunkt ist dabei der volle Ladezustand der Akkumulatoren bei 11, allenfalls nur mit Erhaltungsladen, der beispielsweise durch eine vorhergehende Erstladephase erreicht wurde, und durch einen Minimalwert des Nachladezählers repräsentiert ist. Die ursprünglich eingespeicherte Maximalkapazität ist wieder durch eine strichpunktierte Linie symbolisiert. Der Abschnitt 12 des Diagramms entspricht einem aktiven Betrieb des Gerätes mit starker Inkrementierung des Nachladezählers und bei 13 ist das Gerät im Bereitschaftsmodus, in dem weniger Strom verbraucht und der Nachladezähler daher nur langsamer anwächst als im aktiven Zustand bei 12. Bei 14 ist dann der leere Ladezustand der Akkumulatoren erreicht, d.h. die Akkumulatorspannung unter die diesen Zustand signalisierende Spannungsschwelle von beispielsweise 2,28 V abgesunken. Vor dem automatischen Abschalten des Gerätes wird der aktuelle Wert des Nachladezählers als die neue Maximalkapazität repräsentierend im EEPROM abgespeichert, was durch das höhere Niveau der strichpunktierten Linie gekennzeichnet ist.

Da die Dauer des Ausschaltens des Gerätes nicht erkannt werden kann, wird auf den aktuellen Wert des Nachladezählers ein vorbestimmter Anteil, vorzugsweise 10% der Maximalkapazität aufinkrementiert. Dann erfolgt, dargestellt durch den Abschnitt 15 das Laden der Akkumulatoren bis zum vollen Ladezustand, repräsentiert durch den Wert Null des Nachladezählers. Dieses Volladen erfolgt vorteilhafterweise mit maximalem Strom, da ja nun die Maximalkapazität und die benötigte Ladung der Akkumulatoren bekannt ist und daher keine Überladung zu befürchten ist.

Sollten dann wieder andere Akkumulatoren zum Einsatz kommen, die einen geringere Maximalkapazität aufweisen, wird durch den Betrieb des Gerätes, bei 16, wiederum bei einem geringeren Wert des Nachladezählers bei 17 ein leerer Zustand der Akkumulatoren erreicht, welcher neuerlich als aktueller Wert für die nachfolgende Ladephase abgespeichert wird, ebenfalls wieder mit der 10%igen Aufinkrementierung zum Ausgleich der Zeitspanne der Abschaltung.

Eine andere Möglichkeit zum Erlernen einer neuen Kapazität ist gegeben, wenn das Gerät abgeschaltet wird und der Nachladezähler ein höheres Kapazitätsniveau signalisiert als im vorherigen Zustand. Diese Variante ist im Diagramm der Fig. 3 dargestellt.

Ausgangspunkt ist wieder ein voller Ladezustand der Akkumulatoren bei 21, wobei dann der Wert des Nachladezählers durch Gebrauch des Gerätes im Bereich 22 anwächst, was über Strombilanzierung ermittelt wird. Dann wird das Gerät bei 23 ausgeschaltet. Vor dem Ausschalten wird noch die im EEPROM gespeicherte Maximalkapazität, repräsentiert durch den vor dem Abschnitt 23 liegenden Teil der strichpunktierten Linie, mit dem Inhalt des Nachladezählers verglichen. Ist dieser wie in Fig. 3 größer, so wird dieser Wert des Nachladezählers als neue Maximalkapazität abgespeichert und die nachfolgende Ladephase mit maximalem Strom bis zum Wert Null des Nachladezählers, bei 24, durchgeführt. Auch hier erfolgt vorteilhafterweise wieder die vorhergehende Aufinkrementierung von 10% der Maximalkapazität.

Nach der Volladephase und längerem Betrieb wird das Gerät dann bei 25 wieder ausgeschaltet. Nachdem hier aber der Wert des Nachladezählers kleiner ist als der gespeicherte Wert für die neu erlernte Maximalkapazität, wird diese nicht verändert und kein neuer Wert gespeichert. Das nachfolgende Laden der Akkumulatoren bis zur Maximalkapazität erfolgt wieder, nach 10%iger Inkrementierung, vom aktuellen Wert bis zum Wert Null des Nachladezählers.

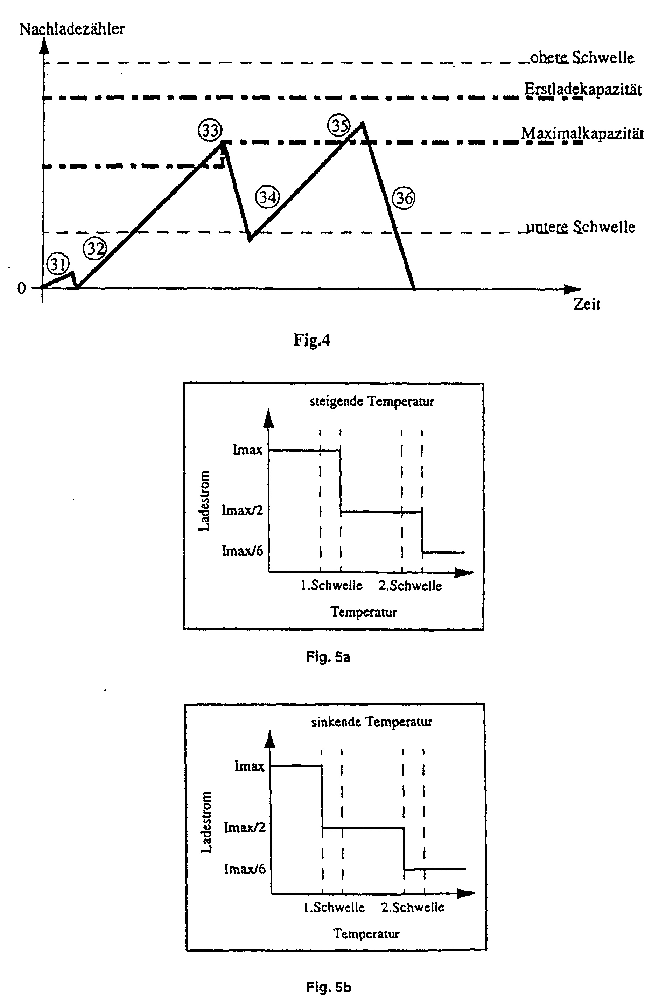

In der Fig. 4 ist schließlich eine weitere-Variante in Diagrammform dargestellt, wie eine neue Kapazität von Akkumulatoren erlernt werden kann. Wieder wird von voll aufgeladenen Akkumulatoren, allenfalls mit Erhaltungsladung, bei 31, ausgegangen. Bei Betrieb des Gerätes im Abschnitt 32 wird der Nachladezähler inkrementiert und schließlich bei 33 mit der Ladeeinrichtung verbunden, ohne daß vorher ein Entladezustand der Akkumulatoren erreicht wurde. Nachdem der Wert des Nachladezählers bei 33 aber größer ist als die vorher gespeicherte Maximalkapazität, wird dieser neue Wert als neue Maximalkapazität abgespeichert, was durch die Anhebung der strichpunktierten Linie auf ein höheres Niveau symbolisiert ist.

Bevor aber die anschließende Ladephase mit der vollständigen Ladung der Akkumulatoren beendet ist, wird das Gerät von der Ladeeinrichtung getrennt und neuerlich in Betrieb genommen, was durch das Anwachsen des Nachladezählers im Abschnitt 34 von einem Wert ungleich Null bis zu einem Wert bei 35 repräsentiert ist, welcher Wert über der Maximalkapazität liegt. Da aber nicht von voll aufgeladenen Akkumulatoren ausgegangen wurde, war eines der Kriterien für das lernende Verfahren gemäß der Erfindung nicht gegeben, so daß der neue Wert des Nachladezählers nicht als neue Maximalkapazität gespeichert wird und diese also unverändert erhalten bleibt.

Bei einer anschließenden Volladephase 36 wird also vom aktuellen Wert des Nachladezählers bis zum Wert Null mit maximalem Strom geladen. Da das Gerät auch nicht ausgeschaltet war, erfolgt auch keine ausgleichende Aufinkrementierung wie bei den vorhergegangenen Beispielen.

Die oben beschriebenen Merkmale zur Erkennung der Kapazität und des Ladezustandes neu eingesetzter Akkumulatoren kann sowohl als fest Schaltung als auch vorzugsweise als Software-Variante realisiert sein.

Schließlich sei noch erwähnt, daß während des Ladens die Überwachung einzelner Parameter, zusätzlich zu der schon erläuterten Ladestrommessung, notwendig ist, da bei Überladung der Akkumulatoren mit dem maximalen Strom die Akkutemperatur und somit der Zelleninnendruck steigt, worauf eine Schädigung der Zellen mit Beeinträchtigung der Lebensdauer und der Kapazität bis hin zur Zerstörung eintreten kann.

So wird etwa während des Volladens die maximale Ladespannung nachgezogen. Sinkt die Ladespannung um einen bestimmten Betrag wieder ab, wird nach einer vorbestimmten Zeitspanne kontinuierlichen Unterschreitens, beispielsweise 5 Minuten, der Vorgang abgebrochen. Während der ersten Zeit der Volladung, etwa der ersten fünf Lademinuten, bei Umschaltung des Ladestromes (z. B. Temperaturmessung) und während des Normalladens ist diese sogenannte "-dU-Erkennung" abgeschaltet, ansonst aber immer aktiv, sobald mit maximaler Stromstärke geladen wird. Dies geschieht, um Fehlschaltungen bei Spannungsüberhöhungen bei Ladebeginn bzw. Spannungssenken beim Ausschalten des Ladestromes zu verhindern. Sinkt die Ladespannung infolge von Laständerung ab (z. B. bei Ruf, Gespräch, Anzeigebeleuchtung, usw. im Fall von beispielsweise Mobiltelefonen), so wird die maximale Ladespannung entsprechend nach unten korrigiert.

Eine weitere Schutzmaßnahme ist die in den Fig. 5a und 5b in Diagrammform dargestellte Temperaturüberwachung. Dafür werden Temperaturschwellen inklusive Hysteresen definiert. Sollte während des Ladens mit maximalem Strom der obere Wert einer von zwei unteren Schwellenwerte erreicht werden, wird auf halben Ladestrom umgeschaltet. Dies kann wieder in einfacher Art und Weise durch abwechselndes Laden mit maximalem Strom für eine bestimmte Zeitspanne und anschließendes Unterbrechen des Ladens für die-gleiche Zeitspanne verwirklicht sein. Bei Erreichen einer zweiten oberen Schwelle wird auf Erhaltungsladen mit vorzugsweise einem Sechstel des maximalen Stroms umgeschaltet und auch die Strombilanzierung ausgeschaltet. Diese Stromreduzierung bei steigender Temperatur ist in Fig. 5a gezeigt.

Sinkt anschließend die Temperatur wieder ab, so wird bei Erreichen der unteren zweiten Schwelle das Laden mit halbem Ladestrom sowie die Strombilanzierung wieder eingeschaltet, wie in Fig. 5b dargestellt ist. Wenn dann nach weiterem Absinken der Temperatur auch die untere erste Temperaturschwelle erreicht wurde, wird der Ladestrom schließlich wieder auf den maximalen Wert zum beschleunigten Laden erhöht. Bei allen Strom-Umschaltvorgängen muß eine allfällige -dU-Erkennung ausgesetzt sein.

Die Akkumulatorentemperatur wird vorzugsweise in bestimmten Zeitabständen ermittelt, beispielsweise alle fünf Minuten, wobei jeder Meßvorgang eine Aufnahme von 40 Temperaturwerten mit anschließender arithmetischer Mittelwertbildung beinhaltet.

Schließlich soll noch auf eine sichere Erkennung des Entladezustandes der Akkumulatoren eingegangen werden. Um den vorab festgestellten Referenzwert für den Entladezustand, üblicherweise 2,28 V, wird ein Spannungsfenster definiert. Darin wird der Entladungskurvengradient ermittelt, beispielsweise in einem Meßraster vom Abstand einer Minute, um im Spannungsknie der Entladekurve unabhängig vom verwendeten Akkumulator des-' sen Entladungszustand zu melden, was bei einer Krümmung der Entladekurve (2. Ableitung) erfolgt.

Der Entladezustand wird gemeldet, wenn entweder die untere Grenze des Fensterbereiches erreicht wird oder die Spannung im Fensterbereich liegt, der Gradient der Entladekurve negativer als ein vorbestimmter Wert (in Spannungsabfall/Zeit) ist und der Gradient eine vordefinierte Anzahl von Malen, vorzugsweise dreimal, hintereinander stärker negativ als zuvor wurde.

Bei Laständerungen, wie etwa Ruf, Gespräch usw., wird die letztbeschriebene Zählung rückgesetzt, weil sonst fälschlicherweise der Entladungszustand signalisiert wird. Denn hier liegt eine Linkskrümmung der Entladekurve vor, während der Entladezustand bei einer Rechtskrümmung gemeldet werden soll. Weiter wird die Zählung auch zurückgesetzt, wenn der Gradient nicht mehr stärker negativ wird, wobei keine Rechtskrümmung mehr bzw. eine Fehlmessung vorliegt.

## Patentansprüche

1. Verfahren zum Laden von Akkumulatoren, insbesondere in schnurlosen Kommunikationseinrichtungen, bei dem eine Erstladephase der Akkumulatoren nach dem ersten Einsetzen in das Gerät bis zur vollen Aufladung vorgesehen ist, bei dem die Akkumulatoren zumindest zum Teil entladen werden und zu jedem Zeitpunkt ein die bisher entnommene Kapazität repräsentierender Wert generiert wird, bei dem zu Beginn einer neuerlichen Ladephase dieser generierte Wert mit einem die Dauer der Erstladephase repräsentierenden, abgespeicherten Basiswert verglichen wird,
**dadurch gekennzeichnet, daß** eine daran anschließende Ladephase folgt, deren Dauer entweder
gleich jener der Erstladephase ist, wenn der generierte Wert kleiner oder gleich dem Basiswert ist,
oder in Abhängigkeit vom generierten Wert festgelegt wird, wenn der generierte Wert größer als der ursprüngliche Basiswert ist, welcher generierte Wert darüber hinaus als neuer Basiswert abgespeichert wird,
und daß bei Beginn der zu dem generierten Basiswert führenden Entladungsphase die Akkumulatoren einen vollen Ladezustand haben.

2. Verfahren nach Anspruch 1, **dadurch gekennzeichnet, daß** die Akkumulatoren nach der Erstladephase vollständig entladen werden und dabei ein die entnommene Kapazität repräsentierender Wert generiert wird, und daß daran anschließende Ladephasen folgen, deren Dauer in Abhängigkeit vom generierten Wert festgelegt wird, welcher generierte Wert auch als neuer Basiswert abgespeichert wird, wenn er vom Basiswert abweicht und daß bei Beginn der zu dem generierten Basiswert führenden Entladungsphase die Akkumulatoren einen vollen Ladezustand haben.

3. Verfahren nach Anspruch 1 oder 2, **dadurch gekennzeichnet, daß** die Dauer der Erstladephase und damit der Basiswert in Abhängigkeit von der maximalen Kapazität der erstmalig verwendeten Akkumulatoren anfangs-vorgegeben ist.

4. Verfahren nach einem der vorhergehenden Ansprüche, **dadurch gekennzeichnet,daß** der Basiswert bzw. der aufgrund der entnommenen Kapazität generierte Wert als der Wert eines Nachladezählers gegeben ist, wobei dessen Verkleinerung proportional dem Produkt aus während der Ladephasen gemessenem Ladestrom und Zeit erfolgt.

5. Verfahren nach Anspruch 4, **dadurch gekennzeichnet, daß** der erste, vorgegebene Basiswert und jeder abzuspeichernde generierte Wert des Nachladezählers in einem EEPROM abgelegt wird.

6. Verfahren nach einem der vorhergehenden Ansprüche, **dadurch gekennzeichnet, daß** in einem ersten Teil der Erstladephase, vorzugsweise 5,5 Stunden, mit maximalem Strom geladen wird, und daß im verbleibenden Teil der Erstladephase mit einem geringeren Strom, vorzugsweise der Hälfte des maximalen Stroms, geladen wird.

7. Verfahren nach einem der vorhergehenden Ansprüche, **dadurch gekennzeichnet, daß** ein das Überschreiben des Basiswertes gestattender Zustand im Gerät eingestellt wird, erst wenn eine komplette Erstladephase durchlaufen ist, der aufgrund der zumindest teilweisen Entladung der Akkumulatoren generierte Wert größer als der Basiswert ist oder der aufgrund der vollständigen Entladung der Akkumulatoren generierte Wert vom Basiswert abweicht und der generierte Wert innerhalb vorgegebener Grenzen liegt.

8. Verfahren nach Anspruch 7, **dadurch gekennzeichnet, daß** der das Überschreiben des Basiswerts gestattende Zustand durch ein im EEPROM zurückgesetztes Erstladeflag gegeben ist.

9. Verfahren nach einem der vorhergehenden Ansprüche, **dadurch gekennzeichnet, daß** vor der Erstladephase und nach dem ersten Einsetzen der Akkumulatoren in das Gerät die Akkumulatorspannung ermittelt wird, daß diese ermittelte Spannung mit einer unteren Spannungsschwelle und einem zweiten, vorgegebenen Spannungswert verglichen wird, und daß ein erster Anzeigezustand generiert wird, wenn die ermittelte Spannung kleiner als die untere Spannungsschwelle ist, daß ein zweiter Anzeigezustand generiert wird, wenn die ermittelte Spannung kleiner oder gleich dem zweiten, vorgegebenen Spannungswert ist, und daß ein dritter Anzeigezustand generiert wird, wenn die ermittelte Spannung größer dem zweiten, vorgegebenen Spannungswert ist.

10. Verfahren nach Anspruch 9, **dadurch gekennzeichnet, daß** der zweite Spannungswert aus einem vorgegebenen Spannungswert, der den Entladezustand der Akkumulatoren repräsentiert, und einem im EEPROM abgespeicherten Spannungswert, der die Maximalladespannung der bislang verwendeten Akkumulatoren repräsentiert, gemittelt wird.

11. Verfahren nach einem der Ansprüche 9 bis 10, **dadurch gekennzeichnet, daß** nach der Erstladephase der die bislang entnommene Kapazität repräsentierende, aktuelle generierte Wert mit dem Basiswert für die maximal zu entnehmende Kapazität verglichen wird, und daß ein vierter Anzeigezustand generiert wird, wenn die ermittelte Spannung kleiner als die untere Spannungsschwelle ist, und daß abhängig vom Verhältnis des aktuellen generierten Wertes zum Basiswert weitere den Ladezustand der Akkumulatoren repräsentierende Anzeigezustände generiert werden.

12. Verfahren nach Anspruch 11, **dadurch gekennzeichnet, daß** während jeder sich an die Erstladephase anschließenden Ladephase der erste Anzeigezustand generiert wird, wenn der aktuelle generierte Wert zwischen 0% und 33% des Basiswertes ist, daß der zweite Anzeigezustand generiert wird, wenn der aktuelle generierte Wert zwischen 34% und 66% des Basiswertes ist, daß der dritte Anzeigezustand generiert wird, wenn der aktuelle generierte Wert zwischen 67% und 99% des Basiswertes ist, und daß ein fünfter Anzeigezustand generiert wird, wenn der aktuelle generierte Wert gleich dem Basiswert ist.

13. Verfahren nach einem der vorhergehenden Ansprüche, **dadurch gekennzeichnet, daß** während jeder mit maximalem Strom durchgeführten Ladephase die Ladespannungskurve überwacht und das Laden beendet wird, wenn die Ladespannung über eine bestimmte Zeitspanne kontinuierlich von einem davor erreichten Wert abgesunken ist.

14. Verfahren nach Anspruch 13, **dadurch gekennzeichnet, daß** die Überwachung der Ladespannungskurve zu Beginn des Laden während einer vorbestimmten Zeitspanne, bei allfälligem Umschalten des Ladestroms und während der auf die Erstladephase folgenden Ladephasen ausgesetzt wird.

15. Verfahren nach einem der vorhergehenden Ansprüche, **dadurch gekennzeichnet, daß** die Temperatur der Akkumulatoren während des Ladens überwacht wird, und daß zumindest zwei Temperaturschwellen vorgegeben sind, wobei unterhalb der niedrigeren Temperaturschwelle mit vollem Ladestrom geladen wird, zwischen der niedrigeren und der höheren Temperaturschwelle mit halbem Ladestrom geladen wird, und oberhalb der höheren Temperaturschwelle das Erhaltungsladen, vorzugsweise mit einem Sechstel des vollen Ladestromes, durchgeführt wird.

16. Verfahren nach Anspruch 15, **dadurch gekennzeichnet, daß** jede Temperaturschwelle nochmals in zwei Teilschwellen aufgeteilt ist, wobei im Falle ansteigender Temperatur der Akkumulatoren bei der höheren Teilschwelle der jeweiligen Temperaturschwelle und im Falle abfallender Temperatur bei der niedrigeren Teilschwelle der jeweiligen Temperaturschwelle die Stromstärke des Ladestrom umgeschaltet wird.

17. Verfahren nach einem der vorhergehenden Ansprüche, **dadurch gekennzeichnet, daß** die Entladekurve der Spannung überwacht wird und der erste Anzeigezustand generiert wird, wenn die Spannung in einem Bereich um den den Entladezustand der Akkumulatoren repräsentierenden Wert liegt, der Gradient der Entladekurve einen vorgegebenen negativen Wert überschreitet und eine vorgegebene Anzahl von Malen hintereinander stärker negativ wurde, oder wenn das untere Ende des Bereiches um den den Entladezustand repräsentierenden Wert erreicht wurde.

## Claims

1. Method for charging rechargeable batteries, in particular in cordless communications devices, in which an initial charging phase of the rechargeable batteries is provided after the initial insertion into the appliance until they are fully charged, in which the rechargeable batteries are at least partially discharged and a value which represents the previously drawn capacity is generated at each time, and in which, at the start of a new charging phase, this generated value is compared with a stored basic value which represents the duration of the initial charging phase, **characterized in that** this is followed by a subsequent charging phase whose duration
is equal to that of the initial charging phase if the generated value is less than or equal to the basic value,
or is defined as a function of the generated value, if the generated value is greater than the original basic value, and this generated value is furthermore stored as the new basic value,
and **in that** the rechargeable batteries are in a fully charged state at the start of the discharge phase which leads to the generated basic value.

2. Method according to Claim 1, **characterized in that** the rechargeable batteries are completely discharged after the initial charging phase and, in the process, a value is generated which represents the capacity drawn, and **in that** this is followed by charging phases whose duration is defined as a function of the generated value, which generated value is also stored as the new basic value if it differs from the basic value, and **in that** the rechargeable batteries are fully charged at the start of the discharge phase which leads to the generated basic value.

3. Method according to Claim 1 or 2, **characterized in that** the duration of the initial charging phase, and hence the basic value, are initially predetermined as a function of the maximum capacity of the rechargeable batteries when they are used for the first time.

4. Method according to one of the preceding claims, **characterized in that** the basic value and the value which is generated on the basis of the capacity drawn are quoted as the value of a recharging counter, with this reduction being proportional to the product of the time and the charging current measured during the charging phases.

5. Method according to Claim 4, **characterized in that** the first, predetermined basic value and each generated value of the recharging counter to be stored are stored in an EEPROM.

6. Method according to one of the preceding claims, **characterized in that**, in a first part of the initial charging phase, preferably for 5.5 hours, charging is carried out with a maximum current, and **in that** in the remaining part of the initial charging phase, charging is carried out with a lower current, preferably half the maximum current.

7. Method according to one of the preceding claims, **characterized in that** a state which allows the overwriting the basic value is set in the appliance only once a complete initial charging phase has been completed, the value which is generated on the basis of the at least partial discharging of the rechargeable batteries is greater than the basic value, or the value which is generated on the basis of the complete discharging of the rechargeable batteries differs from the basic value and the generated value is within predetermined limits.

8. Method according to Claim 7, **characterized in that** the state which allows the overwriting of the basic value is provided by an initial charging flag, which is reset in the EEPROM.

9. Method according to one of the preceding claims, **characterized in that** the accumulator voltage is determined before the initial charging phase and after the initial insertion of the rechargeable batteries into the appliance, **in that** this determined voltage is compared with a lower voltage threshold and with a second, predetermined voltage value, and **in that** a first indication state is generated if the determined voltage is less than the lower voltage threshold, **in that** a second indication state is generated if the determined voltage is less than or equal to the second, predetermined voltage value, and **in that** a third indication state is generated if the determined voltage is greater than the second, predetermined voltage value.

10. Method according to Claim 9, **characterized in that** the second voltage value is obtained from a predetermined voltage value which represents the discharge state of the rechargeable batteries, and from a voltage value which is stored in the EEPROM and represents the maximum charging voltage of the previously used rechargeable batteries.

11. Method according to one of Claims 9 or 10, **characterized in that**, after the initial charging phase, the value which represents the previously drawn capacity and is being generated at that time is compared with the basic value for the maximum capacity to be drawn, and **in that** a fourth indication state is generated if the determined voltage is less than the lower voltage threshold, and **in that** further indication states are generated, which represent the state of charge of the rechargeable batteries, as a function of the ratio of the value generated at that time to the basic value.

12. Method according to Claim 11, **characterized in that** the initial indication state is generated during each charging phase which follows the initial charging phase, if the value generated at that time is between 0% and 33% of the basic value, **in that** the second indication state is generated if the value generated at that time is between 34% and 66% of the basic value, **in that** the third indication state is generated if the value generated at that time is between 67% and 99% of the basic value, and **in that** a fifth indication state is generated if the value generated at that time is equal to the basic value.

13. Method according to one of the preceding claims, **characterized in that** the charging voltage curve is monitored and the charging process is ended during each charging phase which is carried out with the maximum current, once the charging voltage has fallen continuously from a previously reached value over a specific time period.

14. Method according to Claim 13, **characterized in that** the monitoring of the charging voltage curve is stopped during a predetermined time interval at the start of the charging process, in the event of any switching of the charging current, and during the charging phases which follow the initial charging phase.

15. Method according to one of the preceding claims, **characterized in that** the temperature of the rechargeable batteries is monitored during the charging process, and **in that** at least two temperature thresholds are predetermined, with the charging process being carried out with the full charging current below the lower temperature threshold, with the charging process being carried out with half the charging current between the lower temperature threshold and the higher temperature threshold, and with the maintenance charging process being carried out, preferably with one sixth of the full charging current, above the higher temperature threshold.

16. Method according to Claim 15, **characterized in that** each temperature threshold is once again subdivided into two threshold elements, with the current level of the charging current being switched at the higher threshold element of the respective temperature threshold when the temperature of the rechargeable batteries is rising and being switched at the lower threshold element of the respective temperature threshold when the temperature is falling.

17. Method according to one of the preceding claims, **characterized in that** the voltage discharge curve is monitored, and the initial indication state is generated if the voltage is in a range around the value which represents the discharged state of the rechargeable batteries, the gradient of the discharge curve exceeds a predetermined negative value and has become increasingly negative on a predetermined number of occasions successively, or if the lower end of the region around the value which represents the discharged state has been reached.

## Revendications

1. Procédé pour charger des accumulateurs, notamment dans des unités de communication sans fil, dans lequel une phase de première charge des accumulateurs est prévue jusqu'à la pleine charge, après la première insertion dans l'appareil, dans lequel les accumulateurs sont déchargés au moins en partie et une valeur représentant la capacité prélevée jusqu'à présent est générée à tout moment, dans lequel au début d'une nouvelle phase de charge cette valeur générée est comparée à une valeur de base enregistrée et représentant la durée de la phase de première charge,
**caractérisé en ce qu'**une phase de charge succédant à cette phase de première charge suit, dont la durée
est soit égale à celle de la phase de première charge, lorsque la valeur générée est inférieure ou égale à la valeur de base,
est soit déterminée en fonction de la valeur générée, lorsque la valeur générée est supérieure à la valeur de base d'origine, laquelle valeur générée est en outre enregistrée comme nouvelle valeur de base,
et **en ce qu'**au début de la phase de décharge entraînant la valeur de base générée, les accumulateurs ont un état de pleine charge.

2. Procédé selon la revendication 1, **caractérisé en ce que** les accumulateurs sont complètement déchargés après la phase de première charge et **en ce qu'**une valeur représentant la capacité prélevée est générée en même temps, et **en ce que** des phases de charge succédant à la phase de première charge suivent, dont la durée est déterminée en fonction de la valeur générée, laquelle valeur générée est également enregistrée comme nouvelle valeur de base, lorsqu'elle est différente de la valeur de base, et **en ce qu'**au début de la phase de décharge entraînant la valeur de base générée, les accumulateurs ont un état de pleine charge.

3. Procédé selon la revendication 1 ou 2, **caractérisé en ce que** la durée de la phase de première charge, et donc la valeur de base, sont prédéfinies au début en fonction de la capacité maximale des accumulateurs utilisés pour la première fois.

4. Procédé selon l'une des revendications précédentes, **caractérisé en ce que** la valeur de base resp. la valeur générée en raison de la capacité prélevée est donnée comme la valeur d'un compteur de recharge, la diminution de ce compteur étant réalisée proportionnellement au produit du courant de charge mesuré pendant les phases de charge et du temps.

5. Procédé selon la revendication 4, **caractérisé en ce que** la première valeur de base prédéfinie et chaque valeur générée du compteur de recharge à enregistrer sont entrées dans une mémoire EEPROM.

6. Procédé selon l'une des revendications précédentes, **caractérisé en ce que** dans une première partie de la phase de première charge, de préférence 5,5 heures, la charge est réalisée avec le courant maximum, et **en ce que** dans la partie restante de la phase de première charge, la charge est réalisée avec un courant moindre, de préférence avec la moitié du courant maximum.

7. Procédé selon l'une des revendications précédentes, **caractérisé en ce qu'**un état permettant le dépassement de la valeur de base est réglé dans l'appareil seulement lorsqu'une phase complète de première charge a été exécutée, **en ce que** la valeur générée en raison de la décharge au moins partielle des accumulateurs est supérieure à la valeur de base ou que la valeur générée en raison de la décharge complète des accumulateurs est différente de la valeur de base et que la valeur générée est située dans des limites prédéfinies.

8. Procédé selon la revendication 7, **caractérisé en ce que** l'état permettant le dépassement de la valeur de base est donné par un indicateur de première charge remis à zéro dans la mémoire EEPROM.

9. Procédé selon l'une des revendications précédentes, **caractérisé en ce que** la tension des accumulateurs est déterminée avant la phase de première charge et après la première insertion des accumulateurs dans l'appareil, **en ce que** cette tension déterminée est comparée à un seuil de tension inférieur et à une deuxième valeur de tension prédéfinie, et **en ce qu'**un premier état d'indication est généré lorsque la tension déterminée est inférieur au seuil de tension inférieur, **en ce qu'**un deuxième état d'indication est généré lorsque la tension déterminée est inférieure ou égale à la deuxième valeur de tension prédéfinie, et **en ce qu'**un troisième état d'indication est généré lorsque la tension déterminée est supérieure à la deuxième valeur de tension prédéfinie.

10. Procédé selon la revendication 9, **caractérisé en ce que** la moyenne de la deuxième valeur de tension est calculée à partir d'une valeur de tension prédéfinie, qui représente l'état de décharge des accumulateurs, et d'une valeur de tension enregistrée dans la mémoire EEPROM, qui représente la tension maximale des accumulateurs utilisés jusqu'à maintenant.

11. Procédé selon l'une des revendications 9 à 10, **caractérisé en ce que**, après la phase de première charge, la valeur actuelle générée représentant la capacité prélevée jusqu'à maintenant est comparée à la valeur de base de la capacité à prélever au maximum, et **en ce qu'**un quatrième état d'indication est généré lorsque la tension déterminée est inférieure au seuil de tension inférieur, et **en ce que** d'autres états d'indication représentant l'état de charge des accumulateurs est généré en fonction du rapport de la valeur actuelle générée par rapport à la valeur de base.

12. Procédé selon la revendication 11, **caractérisé en ce que** le premier état d'indication est généré pendant chaque phase de charge succédant à la phase de première charge, lorsque la valeur actuelle générée est entre 0% et 33% de la valeur de base, **en ce que** le deuxième état d'indication est généré lorsque la valeur actuelle générée est entre 34% et 66% de la valeur de base **en ce que** le troisième état d'indication est généré lorsque la valeur actuelle générée est entre 67% et 99% de la valeur de base, et **en ce qu'**un cinquième état d'indication est généré lorsque la valeur actuelle générée est égale à la valeur de base.

13. Procédé selon l'une des revendications précédentes, **caractérisé en ce que** pendant chaque phase de charge exécutée avec le courant maximum, la courbe de tension de charge est contrôlée et la charge est achevée lorsque la tension de charge a baissé en continu pendant une certaine période de temps par rapport à une valeur atteinte auparavant.

14. Procédé selon la revendication 13, **caractérisé en ce que** le contrôle de la courbe de tension de charge est supprimé au début de la charge pendant une période de temps prédéterminée, en cas d'une éventuelle commutation du courant de charge et pendant les phases de charge succédant à la phase de première charge.

15. Procédé selon l'une des revendications précédentes, **caractérisé en ce que** la température des accumulateurs est contrôlée pendant la charge, et **en ce qu'**au moins deux seuils de température sont prédéfinis, la charge étant réalisée avec le courant de charge maximal en dessous du seuil de température inférieur, avec un courant de charge de moitié entre le seuil de température inférieur et le seuil de température supérieur, la charge de maintien étant réalisée de préférence avec un sixième du courant de charge maximal au-delà du seuil de température supérieur.

16. Procédé selon la revendication 15, **caractérisé en ce que** chaque seuil de température est divisé encore une fois en deux seuils partiels, l'intensité de courant du courant de charge étant commutée en cas de température croissante des accumulateurs pour le seuil partiel plus haut du seuil respectif de température et en cas de température en baisse pour le seuil partiel plus bas du seuil respectif de température.

17. Procédé selon l'une des revendications précédentes, **caractérisé en ce que** la courbe de décharge de tension est contrôlée et **en ce que** le premier état d'indication est généré lorsque la tension est située dans une plage aux environs de la valeur représentant l'état de décharge des accumulateurs, lorsque le gradient de la courbe de décharge dépasse une valeur négative prédéfinie et qu'un nombre donné de fois successives est devenu plus fortement négatif ou lorsque l'extrémité inférieure de la plage a été atteinte aux environs de la valeur représentant l'état de décharge.
